# EUROPÄISCHE PATENTANMELDUNG

(11) **EP 4 796 809 A1**
(43) Veröffentlichungstag der Anmeldung: **26.08.2026**
(21) Anmeldenummer: 25159275.4
(22) Anmeldetag: 21.02.2025
(51) Int. Cl.: F16G 15/08, F16M 11/08

(54) **DREHWIRBEL**

(71) Anmelder: Herrmann, Dirk, 01979 Lauchhammer (DE)
(72) Erfinder: Herrmann, Dirk, 01979 Lauchhammer (DE)
(74) Vertreter: Limbeck, Achim

(57) **Zusammenfassung**

Die vorliegende Erfindung betrifft einen Drehwirbel (1) mit einer axial drehbaren Verbindung zwischen mindestens einem ersten (11) und mindestens einem zweiten Verbindungselement (12), um eine angehängte Last an einem der Verbindungselemente (11, 12) gegenüber dem jeweils anderen Verbindungselement (11, 12) drehbar zu machen, wobei die Verbindung aus einem hohlzylindrisch ausgebildeten Aufnahmeteil (10) gebildet ist, zwischen dessen mindestens zwei gegenüberliegend angeordneten Wandungsbereichen (100) ein innenliegendes Freilaufteil (120) vorgesehen ist, welches entlang der Vertikalachse (A) des Aufnahmeteils (10) verschieblich aufgenommen sowie um die Vertikalachse (A) in dem Aufnahmeteil (10) wälz-, gleit- oder dergleichen um die drehbar gelagert ist. Der erfindungsgemäße Drehwirbel (1) ist dadurch gekennzeichnet, dass in den mindestens zwei gegenüberliegend angeordneten Wandungsbereichen (100) des Aufnahmeteils (10) mindestens jeweils eine von Innen (10.1) nach Außen (10.2) oder umgekehrt führende Durchführungsöffnung (1000) zur reversiblen Aufnahme eines durch die mindestens zwei Durchführungsöffnungen (1000) ragenden länglichen Fixierelements (13) ausgebildet ist, wobei an dem Freilaufteil (120) mindestens eine Fixierdurchführungsöffnung (1200) ausgebildet ist, in die das Fixierelement (13) zur drehsicheren Fixierung des Freilaufteils (120) aufgenommen ist.

## Beschreibung

### Technisches Gebiet

Die vorliegende Erfindung betrifft einen Drehwirbel gemäß dem Oberbegriff des Patentanspruchs 1.

### Stand der Technik

Aus dem Stand der Technik sind Drehwirbel in verschiedenartiger Ausführung bekannt und werden als Aufhängeelement für gegen die Aufhängehalterung drehbare Lasten/Elemente, wie beispielsweise Schaukeln, Hängestühle oder Grillroste eines Schwenkgrills eingesetzt, wie beispielsweise aus DE 198 109 42 C2 bekannt.

Aus der US 2009 / 0 208 274 A1 ist ein Dreh- oder Schwenkelement mit einer axial drehbaren Verbindung zwischen einer Öse oder einem Ring mit Stützelement und einem Basiselement mit Schaft bekannt, um eine angehängte Last zwischen beiden Elementen drehbar zu machen, wobei die Verbindung aus einem zylindrisch ausgebildeten Aufnahmeteil gebildet ist, zwischen dessen mindestens zwei gegenüberliegend angeordneten Wandungsbereichen ein innenliegender Schaft vorgesehen ist, welcher um die Vertikalachse mittels Kugeln drehbar gelagert ist.

Vergleichbar ist aus der US 8 757 693 B2 eine Hebevorrichtung mit einer axial drehbaren Verbindung zwischen einem Hebekörper und einem Pfosten bekannt, um eine angehängte Last zwischen diesen beiden Elementen drehbar zu machen, wobei die Verbindung aus einer zylindrisch ausgebildeten Pfostentasche mit mindestens zwei gegenüberliegend angeordneten Wandungsbereichen gebildet ist, die einen Pfostenkopf aufnimmt, welcher um die Vertikalachse in der Pfostentasche mittels Kugeln drehbar gelagert ist. Die Figuren 8 und 10 zeigen dabei weiterhin eine in einem Wandungsbereich der Pfostentasche vorgesehene Öffnung zur reversiblen Aufnahme eines in die Öffnung ragenden Verriegelungselementes, welches zur Drehfixierung des Pfostenkopfes ausgebildet und weiterhin federbelastet ist. Nachteilig bei dieser Hebevorrichtung ist die konkrete Ausführung des Verriegelungselementes, welches fix innerhalb der dafür vorgesehenen Öffnung angeordnet und lediglich knopfbetätigbar ist.

Dabei ist in den bekannten Ausführungen eine einfache, bleibende (nicht dauerhaft zu betätigende), aber wieder lösbare Fixierung in verschiedenen bestimmten Positionen nicht gegeben. Gerade dies ist notwendig, um beispielsweise eine Pflanze in einer Topfampel nach dem Licht auszurichten, einen Hängestuhl in eine bestimmte Position zu bringen oder ein Grillrost entsprechend der Glut auszurichten und dort zu fixieren, so dass eine weitere ungewollte Drehung für diesen selbst gewählten Zeitraum ausgeschlossen ist.

Desweiteren sind eine einfache Zerlegung und damit einhergehende Wartung/Pflege nicht möglich. Zudem erfordern bekannte Ausführungen zusätzliche Schraub- und/oder Schweißverbindungen, welche die Stabilität und die mechanische Belastbarkeit stark einschränken.

### Darstellung der Erfindung

Der vorliegenden Erfindung liegt die Aufgabe zugrunde, einen Drehwirbel zu schaffen, der die vorgenannten Nachteile beseitigt.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Drehwirbels sind in den abhängigen Unteransprüchen angegeben.

Der erfindungsgemäße Drehwirbel umfasst gemäß dem bekannten Stand der Technik zunächst eine axial drehbare Verbindung zwischen mindestens einem ersten und mindestens einem zweiten Verbindungselement, um eine angehängte Last an einem der beiden Verbindungselemente gegenüber dem anderen Verbindungselement drehbar zu machen, wobei die Verbindung aus einem hohlzylindrisch ausgebildeten Aufnahmeteil gebildet ist, zwischen dessen mindestens zwei gegenüberliegend angeordneten Wandungsbereichen ein innenliegendes Freilaufteil vorgesehen ist, welches entlang der Vertikalachse des Aufnahmeteils verschieblich aufgenommen sowie um die Vertikalachse in dem Aufnahmeteil , wälz-, gleit- oder dergleichen um die drehbar gelagert ist.

Gekennzeichnet ist die vorliegende Erfindung dadurch, dass in den mindestens zwei gegenüberliegend angeordneten Wandungsbereichen des Aufnahmeteils mindestens jeweils eine von Innen (Innenraum des Aufnahmeteils) nach Außen (Bereich außerhalb des Aufnahmeteils) oder umgekehrt führende Durchführungsöffnung zur reversiblen Aufnahme eines durch die mindestens zwei Durchführungsöffnungen ragenden länglichen Fixierelements ausgebildet ist, wobei an dem Freilaufteil mindestens eine Fixierdurchführungsöffnung ausgebildet ist, in die das Fixierelement zur drehsicheren Fixierung des Freilaufteils aufgenommen ist.

Diese besondere Ausführungsform der Erfindung erlaubt es, das Freilaufteil durch das Vorhandensein mehrerer Fixierdurchführungsöffnungen mittels des Fixierelements in einer gewünschten Stellung bzw. in verschiedenen Positionen zu fixieren, wobei jederzeit durch Entfernen der Fixierung der Freilauf wieder freigegeben werden kann.

Im nicht fixierten Zustand (Freilauf) wird das Fixierelement vorzugsweise oberhalb des Freilaufteils in einer entsprechenden weiteren Durchführungsöffnung oder weiteren Aufnahme aufgenommen, was so den Zusammenhalt von Aufnahmeteil und Freilaufteil gewährleistet, wobei das Fixierelement selbstverständlich auch woanders platziert werden kann.

### Kurzbeschreibung der Zeichnungen

Weitere Ziele, Merkmale, Vorteile und Anwendungsmöglichkeiten des erfindungsgemäßen Drehwirbels ergeben sich aus der nachfolgenden Beschreibung eines Ausführungsbeispiels anhand der Zeichnungen.

In den Zeichnungen zeigen
Fig. 1 den erfindungsgemäßen Drehwirbel in einer vorteilhaften Ausführungsform in der Seitenansicht, wobei das Fixierelement innerhalb der Durchführungsöffnung zur Fixierung des zweiten Verbindungselements platziert ist;
Fig. 2 den Drehwirbel wie in Fig. 1, zusätzlich mit Schäkel, wobei das Fixierelement in dieser Darstellung innerhalb einer weiteren Durchführungsöffnung der Wandungsbereiche in dem Aufnahmeteil platziert ist;
Fig. 3 den Drehwirbel wie in Fig. 1 in einer um 180° gedrehten Position.
Fig. 4 den Drehwirbel wie in Fig. 2 als Explosionsdarstellung.

### Ausführung der Erfindung

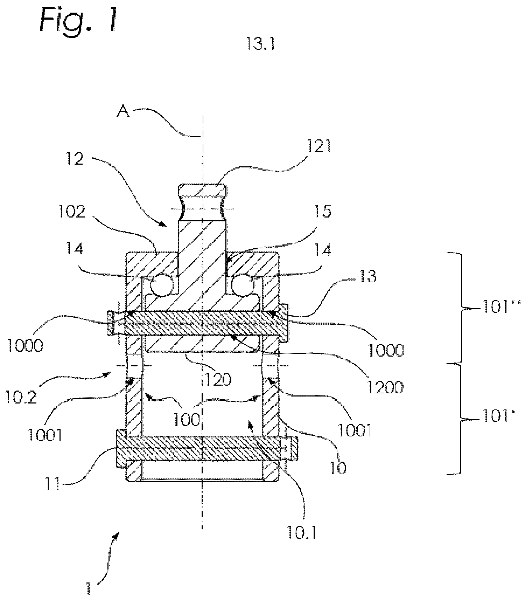

Wie aus Fig. 1 ersichtlich, ist das Freilaufteil 120 und/oder das Aufnahmeteil 10 vorzugsweise derart ausgebildet, dass das Freilaufteil 120 entlang der Vertikalachse A des Aufnahmeteils 10 derart verschieblich zwischen den Wandungsbereichen 100 der Außenwandung des hohlzylindrischen Aufnahmeteils 10 aufgenommen ist, dass es sich von der im durch das Fixierelement 13 fixierten Ausgangsposition 13.1 in Richtung des ersten Verbindungselements 11 verschieben lässt.

Das zweite Verbindungselement 12 umfasst vorzugsweise das Freilaufteil 120 und ein stift- oder bolzenartiges Befestigungsteil 121.

Das Aufnahmeteil 10 weist vorzugsweise eine quer (vorzugsweise orthogonal) zu den Wandungsbereichen 100 bzw. der Außenwandung des hohlzylindrischen Aufnahmeteils 10 ausgerichtete (vorzugsweise plattenförmige) Wandung 102 auf, in der eine mittige Aufnahme 15 oder Durchführung für das Befestigungsteil 121 vorgesehen ist, wobei um die Aufnahme 15 in einem aktiven Bereich 101'' des Aufnahmeteils 10 ein bevorzugtes Wälz- oder Gleitlager 14 oder ein dergleichen geeignetes Lagerteil angeordnet ist, auf dem das Freilaufteil 120 mit seiner Unterseite um die Vertikalachse A in dem Aufnahmeteil 10 drehbar gelagert ist.

Die obige Ausführung in Bezug auf das Freilaufteil 120 und/oder das Aufnahmeteil 10 erlaubt es, das Freilaufteil 120 in Richtung des ersten Verbindungselements 11 derart zu verschieben, dass das Befestigungsteil 121 aus der Aufnahme 15 gezogen werden kann.

Das Freilaufteil 120 liegt vorzugsweise mit seinem Außenrand und entsprechenden Aufnahmen/Rillen auf Kugel- oder Zylinderelementen (ggf. mit Lagerkranz) des Wälz- oder Gleitlagers 14 innerhalb des Aufnahmeteils 10 auf und bildet so das Axiallager, mit dem eine leichtgängige Drehbewegung garantiert ist.

In einer weiteren Ausführung ist es besonders bevorzugt, wenn zwischen dem Freilaufteil 120 und dem ersten Verbindungselement 11 in den mindestens zwei gegenüberliegend angeordneten Wandungsbereichen 100 des Aufnahmeteils 10 mindestens jeweils eine weitere von Innen 10.1 nach Außen 10.2 oder umgekehrt führende Durchführungsöffnung 1001 zur reversiblen Aufnahme des Fixierelements 13 ausgebildet ist.

Die weiteren Durchführungsöffnungen 1001 und/oder das Fixierelement 13 ist vorteilhafterweise angeordnet und/oder ausgebildet, das Verschieben des Freilaufteils 120 entlang der Vertikalachse A aus der Ausgangsposition 13.1 in Richtung des ersten Verbindungselements 11 zumindest bereichsweise zu verhindern, wenn das Fixierelement 13 durch die weiteren Durchführungsöffnungen 1001 geführt ist.

Weiterhin umfasst der erfindungsgemäße Drehwirbel 1 vorzugsweise ein zweites Verbindungselement 12, das aus einem vorteilhaftweise zylindrischen Freilaufteil 120 und einem sich unterhalb angrenzenden Befestigungsteil 121 gebildet ist. Das Aufnahmeteil 10 der Verbindung ist vorteilhafterweise hohlzylindrisch ausgebildet, wobei auch eine u-förmige Ausbildung in Betracht kommt.

Durch Variationen des fixierbaren Drehwirbels 1 im Größenmaßstab können diverse Belastungsbereiche (Arbeitslasten) erreicht werden und damit ist beispielsweise der Einsatz mit geringen Größenabmessungen für eine Topfampel mit wenigen Kilogramm Gewicht bis hin zur Ausführung mit sehr großen Abmessungen für Kran- bzw. Hebetechnik und mehreren Tonnen Tragkraft möglich.

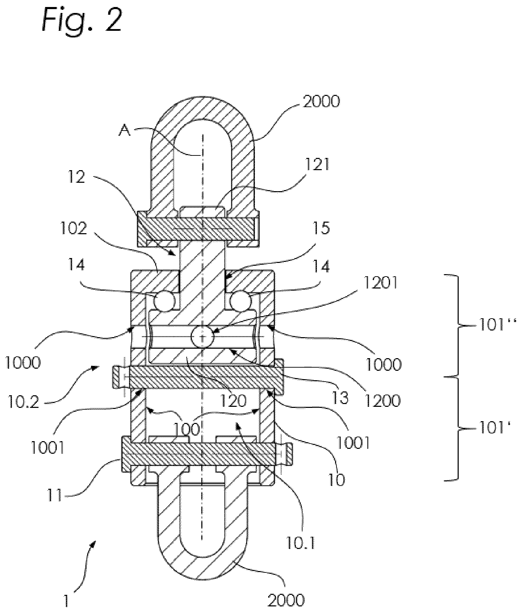

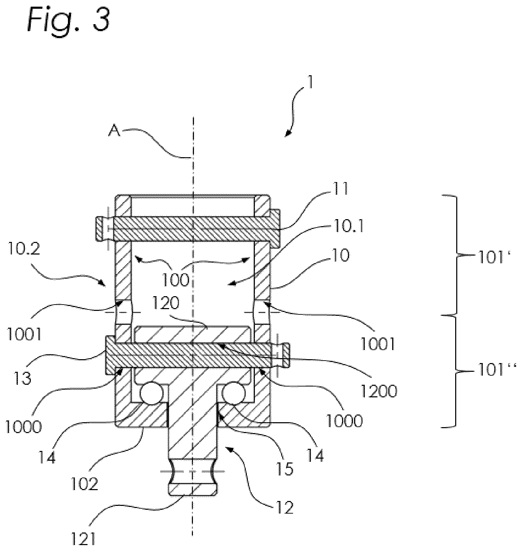

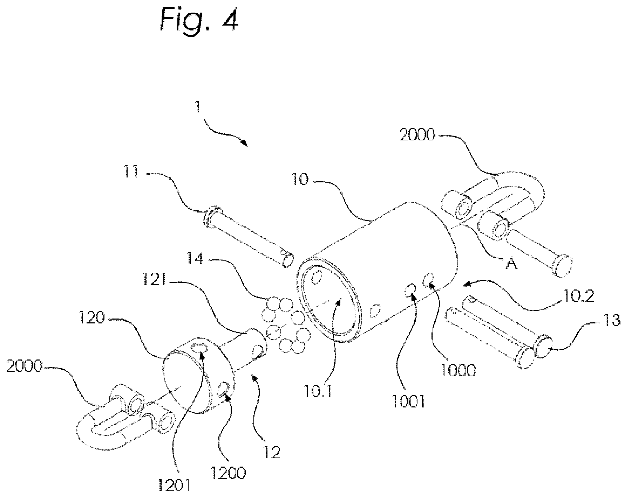

In der in den Fign. 1-4 dargestellten Ausführungsform der Erfindung sind an zwei gegenüberliegend angeordneten Wandungsbereichen 100 weitere Durchführungsöffnungen 1001 zur reversiblen (hier einsteckbaren bzw. durchführbaren) Aufnahme des vorzugsweise länglich ausgebildeten Fixierelements 13 vorgesehen.

Das Fixierelement 13 kann beispielsweise ein Bolzen, ein Stift oder eine Schraube sein.

Weiterhin ist es vorteilhaft, wenn das Fixierelement 13 und/oder das Freilaufteil 120 und/oder die weitere Durchführungsöffnungen 1001 und/oder das Aufnahmeteil 10 derart ausgebildet und/oder angeordnet ist/sind, dass das Freilaufteil 120 (vorzugsweise nebst Befestigungsteil 121) aus dem Aufnahmeteil 10 oberhalb der Lagerung entnehmbar ist.

In einer weiteren vorteilhaften und in den Fign. 1-4 dargestellten Ausführungsform der Erfindung ist das erste Verbindungselement 11 an dem Aufnahmeteil 10 reversibel angeordnet, wobei hierzu vorzugsweise entsprechend den weiteren Durchführungsöffnungen 1001 ausgebildete Aufnahmen zur Einführung des ersten Verbindungselements 11 vorgesehen sein können.

Zur Reinigung, Schmierung und/oder Revision kann das Fixierelement 13 aus der Position der weiteren Durchführungsöffnung 1001 oder Aufnahme entfernt werden und der Drehwirbel 1 ist in alle Einzelteile zerlegbar.

Das Aufnahmeteil 10 kann wahlweise beispielsweise mit Bolzen oder Karabiner an einem tragenden Element (Seil/Kette/Gestänge) befestigt oder mittels eines Laufrades flexibel geführt werden.

Das Befestigungsteil 121 kann am unteren Ende eine Bohrung/Durchführung zur Aufnahme der Anhängelast/des Anhängelements aufweisen.

### Liste der Bezugsziffern

- 1: Drehwirbel
- 10: Aufnahmeteil
- 10.1: von Innen (Innenraum des Aufnahmeteils)
- 10.2: nach Außen (Bereich außerhalb des Aufnahmeteils)
- 11: erstes Verbindungselement
- 12: zweitesVerbindungselement
- 13: Fixierelement
- 13.1: fixierte Ausgangsposition
- 14: Wälz- oder Gleitlager
- 15: Aufnahme zur Durchführung des Befestigungsteils
- 100: Wandungsbereiche
- 101': passiver Bereich des Aufnahmeteils
- 101": aktiver Bereich des Aufnahmeteils
- 102: Wandung
- 120: Freilaufteil
- 121: Befestigungsteil
- 1000: Durchführungsöffnung
- 1001: weitere Durchführungsöffnung
- 1200: Fixierdurchführungsöffnung
- 1201: weitere Fixierdurchführungsöffnung
- 2000: Schäkel
- A: Vertikalachse

## Patentansprüche

1. Drehwirbel (1) mit einer axial drehbaren Verbindung zwischen mindestens einem ersten (11) und mindestens einem zweiten Verbindungselement (12), um eine angehängte Last an einem der Verbindungselemente (11, 12) gegenüber dem jeweils anderen Verbindungselement (11, 12) drehbar zu machen, wobei die Verbindung aus einem hohlzylindrisch ausgebildeten Aufnahmeteil (10) gebildet ist, zwischen dessen mindestens zwei gegenüberliegend angeordneten Wandungsbereichen (100) ein innenliegendes Freilaufteil (120) vorgesehen ist, welches entlang der Vertikalachse (A) des Aufnahmeteils (10) verschieblich aufgenommen sowie um die Vertikalachse (A) in dem Aufnahmeteil (10) wälz-, gleit- oder dergleichen um die drehbar gelagert ist,
**dadurch gekennzeichnet, dass**
in den mindestens zwei gegenüberliegend angeordneten Wandungsbereichen (100) des Aufnahmeteils (10) mindestens jeweils eine von Innen (10.1) nach Außen (10.2) oder umgekehrt führende Durchführungsöffnung (1000) zur reversiblen Aufnahme eines durch die mindestens zwei Durchführungsöffnungen (1000) ragenden länglichen Fixierelements (13) ausgebildet ist, wobei an dem Freilaufteil (120) mindestens eine Fixierdurchführungsöffnung (1200) ausgebildet ist, in die das Fixierelement (13) zur drehsicheren Fixierung des Freilaufteils (120) aufgenommen ist.

2. Drehwirbel (1) nach Anspruch 1,
**dadurch gekennzeichnet, dass**
das Freilaufteil (120) entlang der Vertikalachse (A) des Aufnahmeteils (10) derart verschieblich zwischen den Wandungsbereichen (100) aufgenommen ist, dass es sich von der im durch das Fixierelement (13) fixierten Ausgangsposition (13.1) in Richtung des ersten Verbindungselements (11) verschieben lässt.

3. Drehwirbel (1) nach Anspruch 1 oder 2,
**dadurch gekennzeichnet, dass**
zwischen dem Freilaufteil (120) und dem ersten Verbindungselement (11) in den mindestens zwei gegenüberliegend angeordneten Wandungsbereichen (100) des Aufnahmeteils (10) mindestens jeweils eine weitere von Innen (10.1) nach Außen (10.2) oder umgekehrt führende Durchführungsöffnung (1001) zur reversiblen Aufnahme des Fixierelements (13) ausgebildet ist.

4. Drehwirbel (1) nach Anspruch 3,
**dadurch gekennzeichnet, dass**
die weiteren Durchführungsöffnungen (1001) und/oder das Fixierelement (13) angeordnet und/oder ausgebildet ist, das Verschieben des Freilaufteils (120) entlang der Vertikalachse (A) aus der Ausgangsposition (13.1) in Richtung des ersten Verbindungselements (11) zumindest bereichsweise zu verhindern, wenn das Fixierelement (13) durch die weiteren Durchführungsöffnungen (1001) geführt ist.

5. Drehwirbel (1) nach einem der vorangegangenen Ansprüche,
**dadurch gekennzeichnet, dass**
das Fixierelement (13) eine Stange, ein Bolzen, ein Stift oder eine Schraube ist.

6. Drehwirbel (1) nach einem der vorangegangenen Ansprüche,
**dadurch gekennzeichnet, dass**
das Fixierelement (13) in seiner Länge derart ausgebildet ist, durch beide gegenüberliegenden Durchführungsöffnungen (1000, 1001) zu ragen.

7. Drehwirbel (1) nach einem der vorangegangenen Ansprüche,
**dadurch gekennzeichnet, dass**
das Fixierelement (13) und/oder das Freilaufteil (120) und/oder die weiteren Durchführungsöffnungen (1001) und/oder das Aufnahmeteil (10) derart ausgebildet und/oder angeordnet ist/sind, dass das Freilaufteil (120) aus dem Aufnahmeteil (10) entnehmbar ist.

8. Drehwirbel (1) nach einem der vorangegangenen Ansprüche,
**dadurch gekennzeichnet, dass**
das erste Verbindungselement (11) an dem Aufnahmeteil (10) reversibel angeordnet ist.

9. Drehwirbel (1) nach einem der vorangegangenen Ansprüche,
**dadurch gekennzeichnet, dass**
das zweite Verbindungselement (12) mindestens ein Befestigungsteil (121) umfasst.
